# EUROPEAN PATENT APPLICATION

(11) **EP 4 650 818 A1**
(43) Date of publication of application: **19.11.2025**
(21) Application number: 25176755.4
(22) Date of filing: 15.05.2025
(51) Int. Cl.: G01S 7/41, G01S 13/86, G01S 13/931, G06V 10/82, G06V 20/58, G06F 18/20

(54) **ADAPTING FOUNDATION MODELS FOR AUTONOMOUS DRIVING**

(30) Priority: 15.05.2024 US 202463648134 P
(71) Applicant: Waymo LLC, Mountain View, CA 94043 (US)
(72) Inventor: WHITE, Brandyn Allen, Mountain View, CA 94043 (US); AL-RFOU, Rami, Mountain View, CA 94043 (US)
(74) Representative: Chettle, John Edward

(57) **Abstract**

Methods, systems, and apparatus, including computer programs encoded on a computer storage medium, for processing and predicting multi-modal data characterizing a driving environment. In one aspect, a method comprises: receiving input data that characterizes a driving environment, wherein the input data comprises a respective input for each of a plurality of data modalities characterizing the driving environment; generating an input multimodal token sequence of input tokens that represents the inputs for each of the plurality of data modalities; and processing the input multimodal token sequence using a token processing neural network to generate an output token sequence representing a prediction about the driving environment.

## Description

### BACKGROUND

This specification relates to processing sensor data characterizing an environment (e.g., a driving environment) for an agent in the environment.

The environment may be a real-world environment, and the agent may be, e.g., a vehicle in the environment.

Processing vehicle sensor data is a task required for motion planning and navigation, e.g., by an autonomous vehicle.

Autonomous vehicles include self-driving cars, boats, and aircraft.

Autonomous vehicles use a variety of on-board sensors and computer systems to detect nearby objects and use such detections to make control and navigation decisions, e.g., by predicting the future trajectories of agents in the vicinity of the autonomous vehicles using the detections.

### BRIEF DESCRIPTION OF THE DRAWINGS

FIG. 1A illustrates an example multi-modal data prediction task using an on-board observation processing system.
FIG. 1B illustrates an example multi-modal data prediction task using an off-board observation processing system.
FIG. 2 is a block diagram for an example multi-modal prediction system.
FIG. 3 is a flow diagram of an example process for processing multi-modal input data characterizing an environment to generate an output prediction regarding the environment.
FIG. 4 is a flow diagram of an example process for generating a sequence of tokens representing structured numerical data characterizing an environment of a vehicle.
FIG. 5 is a flow diagram of an example process training a token processing neural network to perform one or more vehicle prediction tasks.

### DETAILED DESCRIPTION

This specification generally describes a system implemented as computer programs on one or more computers in one or more locations that can process and predict multi-modal data characterizing a driving environment. The processed and predicted multi-modal data can include data for a plurality of data modalities. For example, the processed and predicted multi-modal data can include text descriptions of the driving environment, predicted trajectories of vehicles within the environment, predicted navigation data for a vehicle in the environment (e.g., predicted signals that may be generated or received by a navigation system of the vehicle), predicted sensor data (e.g., images, point-clouds, etc.) for a vehicle in the environment, and so on.

The system described in this specification can process input multi-modal data to predict different modalities of data, e.g., to predict modalities of data not included within the input multi-modal data, to predict data for a proper subset of data modalities included within the input data, to predict data for a particular data modality based on input data for a combination of input data modalities, and so on.

Vehicles often include multiple sub-systems configured to perform various data processing and prediction tasks, such as perception systems for processing sensor data collected by vehicle sensors, navigation systems for determining planned vehicle trajectories and control inputs, user interface systems for receiving inputs from and providing information to vehicle users, and so on. The multiple sub-systems of a vehicle typically perform interrelated processing tasks for the vehicle that depend on input data shared among the multiple sub-systems that includes data for multiple data modalities, e.g., text data generated by user interface systems, sensor data collected by vehicle sensors, structured navigation data generated by navigation systems, and so on.

Conventional systems for vehicle data processing and prediction often rely on separate, dedicated neural networks for performing individual prediction tasks. However, training and using separate neural networks for different prediction tasks can increase system complexity and training costs.

The systems described in this specification address these challenges by utilizing a multi-modal token processing neural network, such as a multi-modal language model, to perform prediction tasks for vehicles by processing input token sequences representing input vehicle data. By processing appropriate token sequences, the described systems can perform various vehicle data processing and prediction tasks including, e.g., generating descriptions of vehicle environment, generating descriptions of roadways, lanes, objects, other vehicles, and so on in vehicle environments, predicting trajectories for objects or vehicles, generating planned trajectories for vehicles, generating predicted sensor data (e.g., image data, RADAR data, LIDAR data, etc.) for vehicle sensors, and so on. In particular, the described systems can receive input queries representing requests to perform particular prediction tasks and, in response, can generate output predictions for the requested prediction tasks.

The described systems can utilize a pre-trained token processing neural network (e.g., a pre-trained multi-modal language model) that has been pre-trained to perform various tasks, such as natural language processing, natural language generation, image processing, image generation, and so on. By adapting the token vocabulary of such a pre-trained token processing neural network to include tokens representing input and output data for vehicle data processing and prediction tasks, the described systems can efficiently train (e.g., fine-tune) the pre-trained token processing neural network to perform vehicle data processing and prediction tasks. As training the token processing neural network to perform such text and image processing tasks can have significant computational costs (e.g., in terms of training time, memory usage, etc.), fine-tuning such a pretrained token processing neural network can enable the described systems to more efficiently (e.g., using fewer training examples, using less training examples, using less memory, etc.) train the token processing neural network to process input data and generate output predictions for vehicle data.

Because input data for different data modalities can provide complementary information for performing prediction tasks, processing multi-modal input data can enable the described systems to generate more accurate predictions as compared to conventional systems that include separate neural networks for processing different input data modalities. Further, the described systems can by trained using training data for various different processing tasks, which can enable the described systems to use a larger set of training data as compared to individual sets of training data used by conventional systems to train separate neural networks. Using such training data for various different processing tasks can enable the described systems to attain better performance for vehicle data prediction tasks as compared to conventional systems that rely on separate neural networks to perform different prediction tasks.

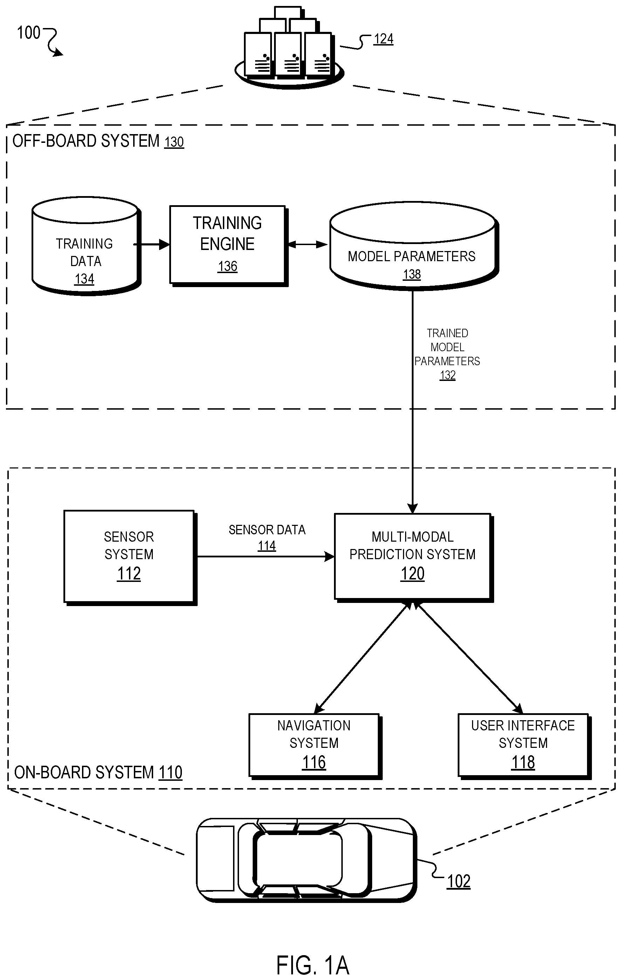

FIG. 1A illustrates an example multi-modal data prediction task in which an on-board system 110 for a vehicle 102 predicts the multi-modal data characterizing an environment of the vehicle 102.

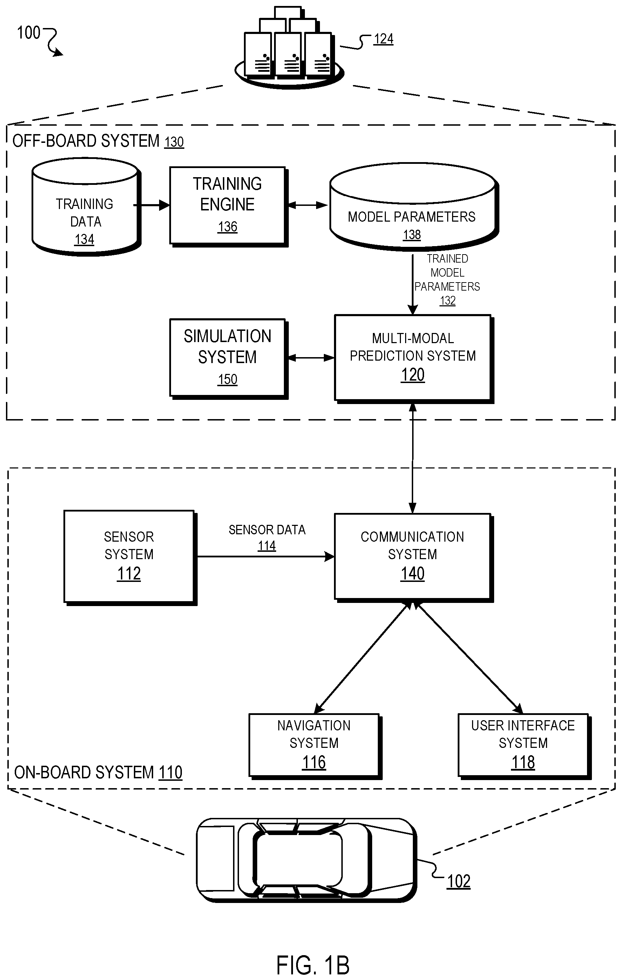

The on-board system 110 is located on-board the vehicle 102. The vehicle 102 in FIG. 1 is illustrated as an automobile, but the on-board system 110 can be located on-board any appropriate vehicle type.

In some cases, the vehicle 102 is an autonomous vehicle. An autonomous vehicle can be a fully autonomous vehicle that determines and executes fully-autonomous driving decisions in order to navigate through an environment. An autonomous vehicle can also be a semi-autonomous vehicle that uses predictions to aid a human driver. For example, the vehicle 102 can autonomously apply the brakes if a prediction indicates that a human driver is about to collide with another vehicle. As another example, the vehicle 102 can have an advanced driver assistance system (ADAS) that assists a human driver of the vehicle 102 in driving the vehicle 102 by detecting potentially unsafe situations and alerting the human driver or otherwise responding to the unsafe situation. As a particular example, the vehicle 102 can alert the driver of the vehicle 102 or take an autonomous driving action when an obstacle is detected, when the vehicle departs from a driving lane, or when an object is detected in a blind spot of the human driver.

The on-board system 110 includes a sensor system 112 (e.g., a perception system) which enables the on-board system 110 to "see" the environment in the vicinity of the vehicle 102. More specifically, the sensor system 112 includes one or more sensors, some of which are configured to receive reflections of electromagnetic radiation from the environment in the vicinity of the vehicle 102. For example, the sensor system 112 can include one or more laser sensors (e.g., LIDAR laser sensors) that are configured to detect reflections of laser light. As another example, the sensor system 112 can include one or more radar sensors that are configured to detect reflections of radio waves. As another example, the sensor system 112 can include one or more camera sensors that are configured to detect reflections of visible light.

The sensor system 112 continually (i.e., at each of multiple time points) captures raw sensor data, which can indicate the directions, intensities, and distances travelled by reflected radiation. For example, a sensor in the sensor system 112 can transmit one or more pulses of electromagnetic radiation in a particular direction and can measure the intensity of any reflections as well as the time that the reflection was received. A distance can be computed by determining the time which elapses between transmitting a pulse and receiving its reflection. Each sensor can continually sweep a particular space in angle, azimuth, or both. Sweeping in azimuth, for example, can allow a sensor to detect multiple objects along the same line of sight.

The sensor system 112 can generate sensor data 114 that characterizes the raw sensor data captured by the sensors of the vehicle 102. The sensor data 114 characterizes a scene in an environment, e.g., an area of the environment that includes the area within a threshold distance of the autonomous vehicle or the area that is within range of at least one sensor of the vehicle.

In some examples, the sensor data 114 includes raw sensor data generated by one or more sensors from the sensor system 112. In some examples, the sensor data 114 includes data that has been generated from the outputs of an object detector that processes the raw sensor data from the sensor system 112.

The on-board system 110 can use a multi-modal prediction system 120 to generate predictions about the environment of the vehicle 102 by processing the sensor data 114, data from a navigation system 116 of the vehicle 102, and/or data from a user interface system 118 of the vehicle.

Generally, the multi-modal prediction system 120 can process data for any of a plurality of data modalities that describe the scene in the environment. The multi-modal prediction system 120 can then predict data for some or all of the plurality of data modalities that describe the scene in the environment. A data modality, as used in this specification, refers to a feature that provides a particular type of information about the environment. Thus, different modalities provide different types of information about the environment.

As an example, the plurality of data modalities can include one or more sensor data modalities (e.g., images, point-clouds, etc.) representing raw sensor data. As another example, the plurality of data modalities can include an object detection modality representing detected objects in the environment. As another example, the plurality of data modalities can include one or more of the following modalities: a traffic light state modality that provides information about a traffic light state of traffic lights in the environment, a road graph data modality that provides static information about the roadways in the environment, an agent trajectory modality that provides information about, e.g., current, previous, and predicted positions of agents in the environment, and an agent interaction modality that provides information about interactions between agents in the environment. As another example, the plurality of data modalities can include a text modality representing text data for the environment, such as user queries obtained from the user interface system, text descriptions of the environment, and so on.

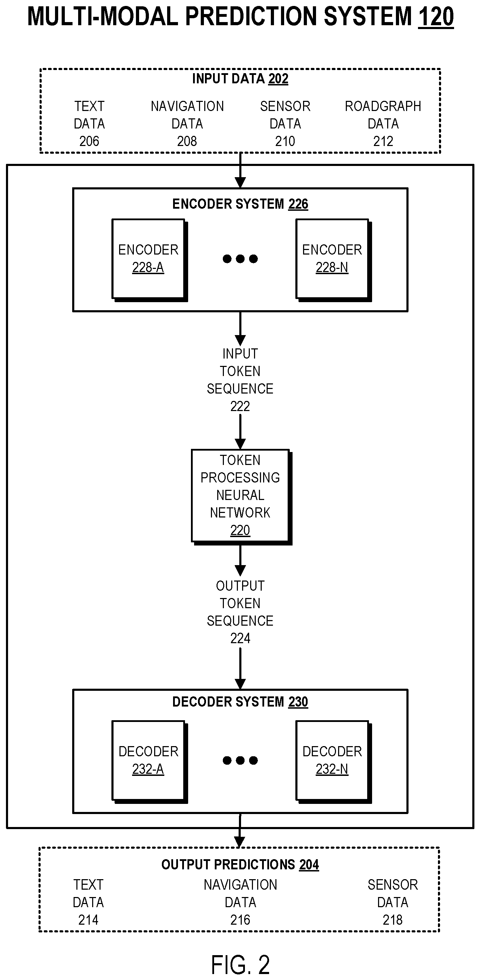

The processing performed by multi-modal prediction system 120 to process and predict multi-modal data characterizing the environment of the vehicle 102 is described in further detail below with reference to FIG. 2.

The on-board system 110 can provide some or all of the multi-modal data generated by the multi-modal prediction system 120 to the navigation system 116, the user interface system 118, or both.

When the navigation system 116 receives predictions generated by the multi-modal prediction system 120, the navigation system 116 can use the predictions generated by the multi-modal prediction system 120 to make fully-autonomous or partly-autonomous driving decisions. For example, the navigation system 116 can generate a fully-autonomous plan to navigate the vehicle 102 to avoid a collision with another agent by changing the future trajectory of the vehicle 102 to avoid the predicted future trajectory of the agent. In a particular example, the on-board system 110 may provide the navigation system 116 with predictions generated by the multi-modal prediction system 120 indicating that another vehicle which is attempting to merge onto a roadway being travelled by the vehicle 102 is unlikely to yield to the vehicle 102. In this example, the navigation system 116 can generate fully-autonomous control outputs to apply the brakes of the vehicle 102 to avoid a collision with the merging vehicle. The fully-autonomous or partly-autonomous driving decisions generated by the navigation system 116 can be implemented by a control system of the vehicle 102. For example, in response to receiving a fully-autonomous driving decision generated by the navigation system 116 which indicates that the brakes of the vehicle should be applied, the control system may transmit an electronic signal to a braking control unit of the vehicle. In response to receiving the electronic signal, the braking control unit can mechanically apply the brakes of the vehicle.

When the user interface system 118 receives predictions generated by the multi-modal prediction system 120, the user interface system 118 can use the predictions generated by the multi-modal prediction system 120 to present information to the driver of the vehicle 102 to assist the driver in operating the vehicle 102 safely. The user interface system 118 can present information to the driver of the vehicle 102 by any appropriate means, for example, by an audio message transmitted through a speaker system of the vehicle 102 or by alerts displayed on a visual display system in the vehicle (e.g., an LCD display on the dashboard of the vehicle 102). In a particular example, the on-board system 110 may provide the user interface system 118 with trajectory prediction output 108 indicating that another vehicle which is attempting to merge onto a roadway being travelled by the vehicle 102 is unlikely to yield to the vehicle 102. In this example, the user interface system 118 can present an alert message to the driver of the vehicle 102 with instructions to adjust the trajectory of the vehicle 102 to avoid a collision with the merging vehicle.

The multi-modal prediction system 120 can include one or more predictive machine learning models configured to perform multi-modal data prediction. Prior to the on-board system 110 using the multi-modal prediction system 120 to make predictions, an off-board system 130 can determine trained model parameters 132 for the multi-modal prediction machine learning models of the system 120.

The off-board system 130 is typically hosted within a data center 124, which can be a distributed computing system having hundreds or thousands of computers in one or more locations.

The off-board system 130 can train multi-modal prediction machine learning models for the trajectory prediction system 120 using training data 134 of the system 130. The training data 134 generally includes example multi-modal data characterizing example scenes. The training data 134 may be obtained from real or simulated driving data logs.

As an example, the training data 134 can include example data for the one or more sensor data modalities (e.g., images, point-clouds, etc.) representing raw sensor data. As another example, the training data 134 can include example data for the object detection modality representing detected objects in the environment. As another example, the training data 134 can include example navigation data for the following modalities: the traffic light state modality that provides information about a traffic light state of traffic lights in the environment, the road graph data modality that provides static information about the roadways in the environment, the agent trajectory modality that provides information about, e.g., current, previous, and predicted positions of agents in the environment, and the agent interaction modality that provides information about interactions between agents in the environment. As another example, the training data 134 can include example text data for the environment, such as example user queries, example text descriptions of the environment, and so on.

The training engine 136 trains the multi-modal prediction machine learning models for the multi-modal prediction system 120 to update model parameters 138 by optimizing an objective function based on target predictions for the training data 134, e.g., an objective function that measures likelihoods of the generating the target predictions by processing corresponding example multi-modal input data, as described in more detail below with reference to FIG. 2.

After training multi-modal prediction machine learning models, the off-board system 130 can send the trained model parameters 132 to the multi-modal prediction system 120, e.g., through a wired or wireless connection.

While this specification describes that the multi-modal predictions are generated on-board an autonomous vehicle, more generally, the described techniques can be implemented on any system of one or more computers that receives images of scenes in an environment. That is, once the off-board system 130 has trained the multi-modal prediction system 120, the multi-modal prediction system 120 can be used by any system of one or more computers.

As one example, the multi-modal predictions can be generated on-board a different type of agent that has sensors and that interacts with objects as it navigates through an environment. For example, the multi-modal predictions can be generated by one or more computers embedded within a robot or other agent.

As another example, the multi-modal predictions can be generated by one or more computers that are remote from the agent and that receive data generated by sensors and navigation systems of the agent. In some of these examples, the one or more computers can use the multi-modal predictions to generate control decisions for controlling the agent and then provide the control decisions to the agent for execution by the agent.

FIG. 1B illustrates an example vehicle sensor data processing task in which the off-board system 130 includes the multi-modal prediction system 120 and processes sensor data for the vehicle 102 to generate predictions regarding the environment of the vehicle 102.

As illustrated in FIG. 1B, the multi-modal prediction system 120 can be located on one or more computers that are remote from the vehicle 102 (e.g., within the data center 124) and can receive data as transmitted by the vehicle 102, e.g., as transmitted by a communication system 140 of the vehicle 102. The multi-modal prediction system 120 can process, e.g., sensor data 114 obtained by the sensor system 112, data generated by the planning system 116, user inputs obtained by the user interface system 118, and so on, transmitted by the communication system 140 of the vehicle 102 to the system 120 in order to generate a prediction of the driving environment for the vehicle 102. The system 120 can then transmit the generated prediction to the vehicle 102, e.g., for use in performing fully-autonomous or semi-autonomous driving tasks.

As an example, the multi-modal prediction system 120 can monitor data transmitted by the vehicle 102 and detect potentially unsafe situations. When the multi-modal prediction system 120 detects an unsafe situation, the system 120 can transmit data to an ADAS system of the vehicle 102 that can then alert a human driver of the vehicle. As another example, the multi-modal prediction system 120 can process sensor data and task data for a navigation task transmitted by the vehicle 102 and can transmit the planned trajectory to the vehicle 102 for use in navigation planning by sub-systems (e.g., the planning system 116) of the vehicle 102.

When the multi-modal prediction system 120 is located on one or more computers that are remote from the vehicle 102, the system 120 can receive and process data generated by sources other than sensors and systems of the vehicle 102 as part of generating predictions for the vehicle 102. For example, the multi-modal prediction system 120 can receive and process sensor data obtained by sensors outside the vehicle 102 that are observing the driving environment of the vehicle 102. As another example, the multi-modal prediction system 120 can receive and process sensor data and navigation data transmitted to the system 120 by other vehicles in the driving environment of the vehicle 102. By processing data from sources other than systems of the vehicle 102, the multi-modal prediction system 120 can transmit information to the vehicle 102 that may otherwise be unavailable to the vehicle 102. For example, the multi-modal prediction system 120 can generate predicted or reconstructed sensor data and transmit the generated sensor data to the vehicle 102 in order to augment the on-board sensor system of the vehicle 102. As a further example, if a portion of the driving environment is obstructed from the view of sensors on-board the vehicle 102, the multi-modal prediction system 120 can transmit predicted or reconstructed sensor data to the vehicle 102 that can provide information to the vehicle 102 about the obstructed portion of the driving environment.

In some implementations, the driving environment can be a simulated driving environment and the vehicle 102 can be a simulated vehicle navigating the simulated driving environment. The simulated driving environment can represent a real-world driving environment and the multi-modal prediction system 120 can generate predictions for simulating the real-world driving environment. For example, a simulation system 150 can generate simulations of real-world driving environments by providing input data specifying simulated scenarios to the multi-modal prediction system 120 and using the multi-modal prediction system 120 to generate predictions for the simulated driving scenarios, such as trajectories for objects in the simulated scenarios, sensor data for the vehicle 102 in the simulated scenarios, and so on.

The simulation system 150 can use the multi-modal prediction system 120 to generate simulations for use in any of a variety of downstream tasks.

For example, the simulation system 150 can use the multi-modal prediction system 120 to generate training data for other machine learning models. For example, the predictions for the simulated driving scenarios can be used as training data for task-specific machine learning for a variety of driving prediction tasks. As an example, the simulation system 150 can use the multi-modal prediction system 120 to generate object trajectories for a plurality of simulated driving scenarios and the object trajectories for the plurality of simulated driving scenarios can be used to train a trajectory prediction machine learning model. As another example, the simulation system 150 can use the multi-modal prediction system 120 to generate object trajectories for a plurality of simulated driving scenarios and the object trajectories for the plurality of simulated driving scenarios can be used to train a trajectory prediction machine learning model. As another example, the simulation system 150 can use the multi-modal prediction system 120 to generate simulated sensor data for a plurality of simulated driving scenarios and the simulated sensor data for the plurality of simulated driving scenarios can be used to train an object detection machine learning model. As another example, the simulation system 150 can use the multi-modal prediction system 120 to generate simulated data for a plurality of simulated driving scenarios and the simulated data for the plurality of simulated driving scenarios can be used to train a navigation planning machine learning model. As another example, the simulation system 150 can use the multi-modal prediction system 120 to generate simulated data for a plurality of simulated driving scenarios and the simulated data for the plurality of simulated driving scenarios can be used to train a classification machine learning model for the driving scenarios (e.g., that can classify a safety of driving scenarios).

As another example, the simulation system 150 can use the multi-modal prediction system 120 to generate simulated data for testing vehicle sub-systems, such as control systems of the vehicle 102, planning systems of the vehicle 102, and so on. For example, the simulation system 150 can use the multi-modal prediction system 120 to generate, e.g., simulated object or vehicle trajectories, simulated sensor data, and so on that can be used as input data for testing vehicle sub-systems. As another example, the simulation system 150 can test, e.g., a vehicle control system, by using the multi-modal prediction system 120 to generate simulated data for simulations of the tested vehicle control system controlling a simulated vehicle.

FIG. 2 is a block diagram for an example multi-modal prediction system 120. The multi-modal prediction system 120 is an example of a system implemented as computer programs on one or more computers in one or more locations in which the systems, components, and techniques described below are implemented.

As described above, the multi-modal prediction system 120 can process input data 202 characterizing an environment (e.g., a driving environment) of a vehicle to generate output predictions 204 for the vehicle. The input data 202 and the output predictions 204 can include data for a time sequence of one or more time steps of the environment.

The input data 202 can include data for any of a variety of data modalities. For example, the input data 202 can include input text data 206, such as user queries, text descriptions of the environment, and so on. As another example, the input data 202 can include input navigation data 208 characterizing, e.g., traffic light states of traffic lights in the environment, current, previous, and predicted positions of agents in the environment, interactions between agents in the environment, detected objects in the environment, and so on. As another example, the input data can include input sensor data 210 for any of a variety of sensor data modalities for the vehicle, e.g., image data, RADAR data, LIDAR data, and so on. As another example, input data 202 can include input road graph data 212 specifying roadways in the environment.

In particular, the multi-modal prediction system 120 can process multi-modal input data 202 that includes data for a plurality of data modalities, e.g., any combination of input text data 206, input navigation data 208, input sensor data 210, and/or input road graph data 212.

As described above with reference to FIG. 1A and FIG. 1B, multi-modal prediction system 120 can receive the input data 202 from any of a variety of on-board and/or off-board systems of the vehicle, e.g., a sensor system of the vehicle, a navigation system of the vehicle, a user-interface system of the vehicle, an off-board system monitoring the vehicle, and so on. In general, the system 120 can receive different portions of the input data 202 from different on-board and/or off-board systems of the vehicle, e.g., input navigation data 208 and/or road graph data 212 from a navigation system of the vehicle, input sensor data 210 from a sensor system of the vehicle, input text data 206 from an off-board system monitoring the vehicle, a navigation system of the vehicle, a user-interface system of the vehicle, and so on.

Similarly, the output predictions 204 can include data for any of a variety of data modalities. For example, output predictions can include output text data 214, such as text descriptions of the environment, text descriptions of predictions generated by the system 120, and so on. As another example, the output predictions 204 can include predicted navigation data 216 characterizing, e.g., predicted traffic light states of traffic lights in the environment, predicted positions of agents in the environment, predicted interactions between agents in the environment, predicted object detections in the environment, and so on. As another example, the output predictions 204 can include predicted sensor data 218 for any of a variety of sensor data modalities, e.g., predicted image data, predicted RADAR data, predicted LIDAR data, and so on.

In particular, the multi-modal prediction system 120 can generate a multi-modal output prediction 204 that includes data for a plurality of data modalities, e.g., any combination of output text data 214, predicted navigation data 216, and/or predicted sensor data 218.

In general, the output prediction 204 can include output data for a different set of data modalities than the input data 202. For example, in some cases the output prediction 204 can include output data for a proper subset of the data modalities of the input data 202. As another example, in some cases, the output prediction 204 can include data for a data modality not included within the input data 202. For example, the multi-modal prediction system 120 can process input text data, input navigation data, and input roadgraph data (e.g., but excludes input sensor data) to generate an output prediction 204 that includes predicted sensor data for the vehicle. As another example, the multi-modal prediction system 120 can process input text data, input sensor data, and input roadgraph data (e.g., but excludes input navigation data) to generate an output prediction 204 that includes predicted navigation data for the vehicle

The multi-modal prediction system 120 can generate the output prediction 204 to perform any of a variety of prediction tasks for the vehicle. For example, the prediction task can include generating a description of environment of the vehicle and the system 120 can generate the output prediction 204 to include a description of the environment of the vehicle. As another example, the prediction task can include generating a description of one or more attributes (e.g., one or more roadways, lanes, objects, other vehicles, etc.) of the environment and the system 120 can generate the output prediction 204 to include descriptions of the one or more attributes of the environment. As another example, the prediction task can include predicting trajectories for one or more objects or vehicles in the environment and the system 120 can generate the output prediction 204 to include predicted trajectories for one or more objects or vehicles in the environment. As another example, the prediction task can include generating a planned trajectory for the vehicle in the environment and the system 120 can generate the output prediction 204 to include the planned trajectory for the vehicle in the environment. As another example, the prediction task can include predicting sensor data for one or more sensors of the vehicle and the system 120 can generate the output prediction 204 to include the predicted sensor data.

As another example, the prediction task can be to generate simulated sensor data and/or simulated navigation data over one or more time steps by processing sensor data and/or navigation data for one or more previous time steps.

In some implementations, the input data 202 can include data (e.g., a text query) characterizing a request to perform a particular prediction task and the multi-modal prediction system 120 can generate the output prediction 204 for the particular prediction task in response to the request.

Some example prediction tasks that the multi-modal prediction system 120 can perform are described in more detail later.

As described above with reference to FIG. 1A and FIG. 1B, multi-modal prediction system 120 can provide the output prediction 204 to any of a variety of on-board and/or off-board systems of the vehicle (e.g., a navigation system of the vehicle, a user-interface system of the vehicle, an off-board system monitoring the vehicle, etc.) for use in any of a variety of downstream tasks. For example, the system 120 can provide the output prediction 204 to a navigation system of the vehicle, which can process the output prediction 204 to, e.g., determine a planned trajectory of the vehicle through the environment, determine control inputs for controlling the vehicle, and so on. As another example, the system 120 can provide the output prediction 204 to an off-board system for use in monitoring a state of the vehicle and/or a state of the environment of the vehicle. As another example, the system 120 can provide the output prediction 204 to a user-interface system of the vehicle, which can process the output prediction 204 to, e.g., provide information characterizing the vehicle and/or the environment to a user of the vehicle, provide a warning to a user of the vehicle, and so on.

To process and predict multi-modal data, the multi-modal prediction system 120 can include a multi-modal token processing neural network 220. The token processing neural network 220 can be configured (e.g., trained) to process an input token sequence 222 representing the input data 202 to generate an output token sequence 224 representing the output prediction 204. Each token of the input token sequence 222 and of the output token sequence 224 can include an embedding (e.g., a numerical embedding, such as a vector, a matrix, a multi-dimensional array, etc.) representing an element of data associated with the token. The token processing neural network 220 can have any appropriate architecture for processing the input token sequence 222 representing the input data 202 to generate the output token sequence 224 representing the output prediction 204. In particular, the token processing neural network 220 can include any of a variety of processing layers (e.g., feedforward layers, convolutional layers, recurrent layers, attention layers, and so on) in any appropriate combination for processing the input token sequence 222 representing the input data 202 to generate the output token sequence 224 representing the output prediction 204.

As described above, the input data 202 and the output predictions 204 can include time sequence data for one or more time steps. The input token sequence 222 and the output token sequence 224 can represent the time sequence of the input data 202 and of the output predictions 204 by any appropriate method, e.g., by ordering their respective tokens in accordance with times associated with the tokens, by including tokens specifying times of the time sequence, by including within the embedding for each token data characterizing a time associated with the token (e.g., as determined using a positional encoding that depends on the times of the time sequence), and so on.

For example, the token processing neural network 220 can be an auto-regressive generative model (e.g., a Transformer neural network, a recurrent neural network, etc.) configured to process the input token sequence 222 to auto-regressively generate the output token sequence 224. A Transformer neural network is a neural network comprising a stack of Transformer blocks, each typically including an attention or self-attention neural network layer configured to perform a respective attention operation (e.g., using an attention mask, such as an auto-regressive attention mask), generally followed by a feedforward neural network layer.

As a further example, the token processing neural network 220 can be a multi-modal language model configured to process tokenized representations of input data for multiple data modalities (e.g., input text data, input image data, etc.) to generate tokenized representations of output data for one or more data modalities (e.g., output text data, output image data, etc.). Example architectures of multi-modal language models are described by the Gemini Team et al. in "Gemini: A Family of Highly Capable Multimodal Models" arXiv preprint arXiv:2312.11805 (2023), the Gemini Team et al. in "Gemini 1.5: Unlocking Multimodal Understanding Across Millions of Tokens of Context" arXiv preprint arXiv:2403.05530 (2024*),* and the Gemma Team et al. in. "Gemma: Open Models Based on Gemini Research and Technology" arXiv preprint arXiv:2403.08295 (2024)*.*

In general, the token processing neural network 220 can be configured to auto-regressively generate output tokens of the output token sequence 224 over a sequence of auto-regressive iterations. At each auto-regressive iteration, the token processing neural network 220 can process the input token sequence 222 and the output token sequence (as of the current auto-regressive iteration) to determine a probability distribution over a token vocabulary of the token processing neural network 220. The token processing neural network 220 can select the output token for the auto-regressive iteration using the probability distribution, e.g., by sampling the output token in accordance with the probability distribution, by selecting a highest-probability output token, and so on.

The token vocabulary of the token processing neural network 220 can include tokens representing data for any of a variety of data modalities, e.g., text tokens representing text data, image tokens representing image data, RADAR tokens representing RADAR data, LIDAR tokens representing LIDAR data, structured data tokens representing structured numerical data, and so on. The input token sequence 222 and the output token sequence 224 can be sequences of tokens from the token vocabulary of the token processing neural network 220.

Each token of the token vocabulary of the token processing neural network 220 can include a respective pre-determined or learned embedding (e.g., a vector, a matrix, a multi-dimensional array of numerical values, etc.) for the data represented by the token. For example, text tokens of the token vocabulary can include embeddings representing respective, e.g., words, wordpieces, characters, logograms, syllabograms and so on for one or more a natural or computer languages. As another example, image tokens of the token vocabulary can include embeddings representing respective pixels or groups of pixels. As another example, RADAR tokens of the token vocabulary can include embeddings representing respective pixels or groups of pixels of images depicting RADAR data. As another example, structured data tokens of the token vocabulary can include embeddings representing respective numerical data for, e.g., point-clouds of LIDAR data, positions and/or trajectories for objects or vehicles in the environment, bounding boxes for detected objects in the environment, spatial locations of roadways in the environment, spatial locations of traffic signals in the environment, and so on.

In some implementations, the token processing neural network 220 can be configured to generate (e.g., auto-regressively generate) the embeddings for the tokens of one or more data modalities (e.g., for one or more data modalities for continuous data, such as image data, RADAR data, LIDAR data, and/or structured numerical data). For example, for one or more of the continuous data modalities, the token processing neural network 220 can include a generative model for the continuous data modality configured conditionally generate embeddings for output tokens of the continuous data modality by processing previously generated output tokens and, optionally, some or all of the input token sequence 222, as described in more detail by Zhou, Chunting, et al. in "Transfusion: Predict the Next Token and Diffuse Images with One Multi-Modal Model" arXiv preprint arXiv:2408.11039 (2024)*.*

In some implementations, the input token sequence 222 can include tokens representing data for one or more data modalities that the token processing neural network 220 is not configured to generate. For example, the input token sequence 222 can include tokens with embeddings representing a continuous data modality that the network 220 is not configured to generate (e.g., a continuous data modality that is not a continuous data modality for which the network 220 includes a generative model).

In some implementations, the token vocabulary of the token processing neural network 220 can include tokens representing classifications or categories for objects or vehicles in the environment generated by another sub-system of the vehicle processing sensor data (e.g., image data, RADAR data, LIDAR data, etc.) from sensor systems of the vehicle. For example, the token vocabulary of the token processing neural network 220 can include tokens representing output classification labels of various sensor data processing neural networks of a navigation system or a sensor system of the vehicle configured to generate classification labels describing input sensor data, such as image classification neural networks configured to generate labels describing input images, object detection neural networks configured to identify and classify objects depicted within input sensor data, sensor data segmentation networks configured to identify and classify spatial regions depicted within input sensor data, and so on

As a further example, the token vocabulary can include tokens that include embeddings representing, e.g., classifications for types of vehicles or objects in the environment of the vehicle (e.g., "passenger vehicle", "emergency vehicle", "sedan", "truck", "bicycle", "pedestrian", "obstruction", etc.), classifications for states of vehicles or objects in the environment of the vehicle (e.g., "damaged", "moving", "merging", etc.), classifications of the environment of the vehicle (e.g., classifications of whether the environment is safe, unsafe, obstructed, flooded, etc.), classifications of the vehicle (e.g., classification of whether the vehicle is operating safely, operating unsafely, damaged, operating unexpectedly, is experiencing a loss of control, is physically secure, etc.), and so on.

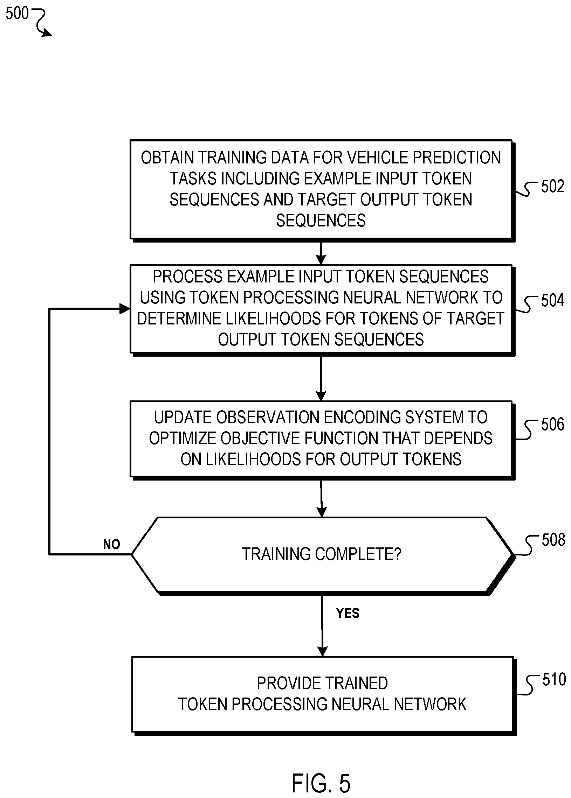

As described in more detail below with reference to FIG. 5, a training system (e.g., the training engine 136 of FIG. 1A) can train (e.g., fine-tune) the token processing neural network 220 using training data that includes example input token sequences and target output token sequences representing example input data and target output predictions for example vehicles in example environments.

Prior to the training system training (e.g., fine-tuning) the token processing neural network 220 to perform vehicle prediction tasks, the token processing neural network 220 can be pretrained to perform, e.g., text processing tasks, text generation tasks, image processing tasks, image generation tasks, and so on. For example, the token processing neural network 220 can be pretrained (e.g., using a maximum-likelihood objective) to process token sequences representing example input data to generate token sequences representing target outputs on a large dataset of example text in one or more natural languages, e.g., text that is publicly available from the Internet or another text corpus, a large dataset of example computer code in one or more programming languages, e.g., Python, C++, C#, Java, Ruby, PHP, and so on, e.g., computer code that is publicly available from the Internet or another code repository, a large dataset of example audio samples, e.g., audio recordings or waveforms that represent the audio recordings, a large dataset of example images where each image includes an array of pixels, a large dataset of example videos where each video includes a temporal sequence of frames, or a large multi-modal dataset that includes a combination of, e.g., example text data, example computer code, example image data, example audio data, and/or example video data.

Such pre-training of the token processing neural network 220 can train the token processing neural network 220 to perform various sub-tasks that are part of processing and predicting data for the vehicle, e.g., natural language processing tasks, natural language text generation tasks, image processing tasks, image generation tasks, and so on. By fine-tuning with training data for vehicle processing tasks, a training system (e.g., the training engine 136 of FIG. 1A) can expand upon the general text and image processing capabilities of such a pre-trained token processing neural network 220 to perform vehicle processing tasks outside the set of tasks used to pre-train the network 220 . As training the token processing neural network 220 to perform such general text and image processing tasks can have significant computational costs (e.g., in terms of training time, memory usage, etc.), fine-tuning such a pre-trained token processing neural network 220 can enable the training system to more efficiently (e.g., using fewer training examples, using less training examples, using less memory, etc.) train the token processing neural network 220 to process input data and generate output predictions for the vehicle.

In general, the token vocabulary of the pre-trained token processing neural network 220 includes, e.g., text tokens representing text data, image tokens representing image data, and so on, but typically does not include tokens specifically representing, navigation data for vehicles, road graph data, LIDAR data, and so on. The multi-modal prediction system 120 can therefore adapt the token vocabulary of the pre-trained token processing neural network 220 to include tokens representing additional data modalities for vehicle data processing and prediction tasks.

For example, in some implementations, the multi-modal prediction system 120 can use tokens from the token vocabulary of the of the pre-trained network 220 that would otherwise not be used as part of performing a vehicle data processing task (e.g., tokens representing unused symbols, unused plain-text characters, Unicode characters, or words in one or more unused natural languages, etc.) to represent navigation data, road graph data, LIDAR data, and so on for vehicle data processing and prediction tasks. By fine-tuning the token processing neural network 220 using example token sequences for example vehicle data processing and prediction tasks, a training system (e.g., the training system 136 of FIG. 1A) can train the token processing neural network 220 to utilize such replaced tokens within the token vocabulary to represent data modalities for vehicle data processing and prediction tasks.

The multi-modal processing system 120 can generate the input token sequence 222 for the token processing neural network 220 using an encoder system 226 configured to process the input data 204 to generate the input token sequence 222 as a representation of the input data 204 using tokens from the token vocabulary of the network 220. The encoder system 226 can include a plurality of encoders (e.g., tokenizers) 228-A through 228-N, each configured to process input data for a respective data modality to generate tokens representing the input data. For example, the encoders 228-A through 228-N can include a text encoder (e.g., a text tokenizer) configured to process sequences of input text data to generate sequences of text tokens from the vocabulary of the network 220, e.g., that each represent words, wordpieces or characters of the input text data. The text encoder can, e.g., implement BPE (Byte Pair Encoding), Wordpiece tokenization, or Sentencepiece tokenization of input text data. As another example, the encoders 228-A through 228-N can include an image encoder configured to process input images to generate sequences of image tokens from the vocabulary of the network 220 representing the input images, e.g., image tokens that each represent a respective pixel, group of pixels, block of pixels, and so on. As another example, the encoders 228-A through 228-N can include a RADAR data encoder configured to process input RADAR data to generate sequences of RADAR tokens from the vocabulary of the network 220 representing the input RADAR data. As another example, the encoders 228-A through 228-N can include a LIDAR data encoder configured to process input LIDAR data to generate sequences of LIDAR tokens from the vocabulary of the network 220 representing the input LIDAR data.

As another example, the encoders 228-A through 228-N can include one or more numerical data encoders configured to process input data characterizing structured numerical data to generate sequences of tokens from the vocabulary of the token processing neural network 220 representing the input numerical data. For example, the encoders 228-A through 228-N can include an encoder configured to process input data specifying positions and/or orientations of objects and vehicles within the environment to generate tokens representing the positions and/or orientations of the objects and vehicles within the environment. As another example, the encoders 228-A through 228-N can include an encoder configured to process input data specifying trajectories of objects and vehicles (e.g., by specifying positions, velocities, and/or accelerations of the objects and vehicles over multiple time steps) within the environment to generate tokens representing the trajectories of objects and vehicles within the environment. As another example, the encoders 228-A through 228-N can include an encoder configured to process input road graph data for the environment to generate tokens representing the road graph of the environment. As another example, the encoders 228-A through 228-N can include an encoder configured to process input data specifying bounding boxes for detected objects and vehicles within the environment to generate tokens representing the bounding boxes for the detected objects and vehicles.

Such numerical data encoders can be configured to quantize input numerical data in any appropriate manner and output tokens representing quantized values for the input numerical data. For example, the numerical data encoders can be configured to quantize input numerical data using a vector quantization technique, as described in more detail by Robert Grey in "Vector Quantization.", IEEE Assp Magazine 1.2 (1984): 4-29. As another example, the numerical data encoders can be neural networks configured to process the input numerical data to generate quantized embeddings representing the input numerical data, as described in more detail by Van Den Oord et al. in "Neural Discrete Representation Learning.", Advances in Neural Information Processing Systems 30 (2017). As another example, the numerical data encoders can be configured to process the input numerical data to generate output sequences of text tokens representing the numerical data as text.

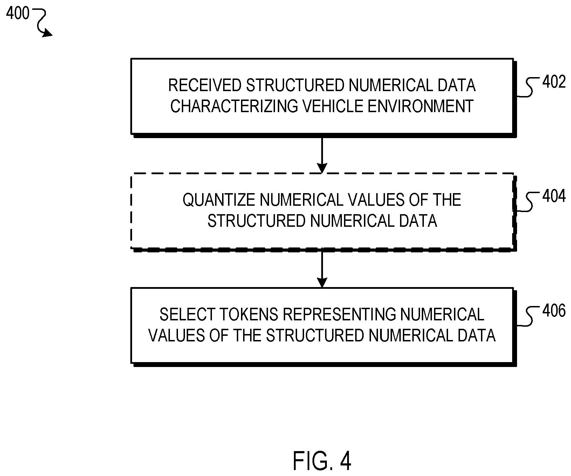

Example methods by which the numerical data encoders can tokenized structured numerical data are described in more detail below with reference to FIG. 4.

An encoder for a given data modality can be a neural network with any appropriate network architecture for processing data for the given data modality to generate embeddings for the given data modality. In particular, an encoder for a given data modality can include any of a variety of processing layers (e.g., feedforward layers, convolutional layers, recurrent layers, attention layers, and so on) in any appropriate combination for processing data for the given data modality to generate embeddings for the given data modality. For example, an image encoder can be, e.g., a convolutional neural network, a Transformer neural network, and so on configured to process input images to generate embeddings for pixels or groups of pixels within the image. As another example, a RADAR data encoder can be, e.g., a convolutional neural network, a Transformer neural network, and so on configured to process input images depicting RADAR data to generate embeddings for pixels or groups of pixels within the images depicting the RADAR data. As another example, a LIDAR data encoder can be a Transformer neural network configured to process input point cloud data to generate embeddings for regions of the point cloud data.

Some or all of the encoders 228-A through 228-N can include pre-trained encoders (e.g., tokenizers) for particular data modalities. For example, the encoders 228-A through 228-N can include one or more pre-trained text encoding neural networks, vision encoding neural networks, and so on from a pre-trained language model or multi-modal language model (e.g., pre-trained encoder neural networks for the pre-trained token processing neural network 220). As another example, the encoders 228-A through 228-N can include encoders obtained by distillation of pretrained text encoding neural networks, vision encoding neural networks, and so on from a pretrained language model or multi-modal language model (e.g., from the pretrained token processing neural network 220).

In some implementations, some or all of the encoders 228-A through 228-N can be trained to generate token sequences representing their respective data modalities. For example, some or all of the encoders 228-A through 228-N can be trained alongside corresponding decoders to optimize a reconstruction error of encoding and decoding example data for their corresponding data modalities. As another example, some or all of the encoders 228-A through 228-N can be jointly trained using a contrastive loss that encourages the encoders 228-A through 228-N to generate token sequences with similar embeddings when processing respective input data characterizing a same environment. An example process for performing such contrastive pre-training of encoders is described in more detail by Jia, Chao, et al. in "Scaling Up Visual and Vision-Language Representation Learning with Noisy Text Supervision" International Conference on Machine Learning, PMLR, 2021 and by Yu, Jiahui, et al. in "CoCa: Contrastive Captioners are Image-Text Foundation Models" arXiv preprint arXiv:2205.01917 (2022).

The multi-modal processing system 120 can process the output token sequence 228 generated by the token processing neural network 220 using a decoder system 226 configured to process the output token sequence 228 to generate data for the output prediction 204. The decoder system 230 can include a plurality of decoders (e.g., detokenizers) 332-A through 332-N, each configured to process sequences of tokens for a respective data modality to generate output data for the respective data modality For example, the decoders 332-A through 332-N can include a text decoder, an image decoder, a RADAR data decoder, a LIDAR data decoder, one or more structured data decoders, and so on.

An decoder for a given data modality can be a neural network with any appropriate network architecture for processing embeddings for the given data modality to generate data for the given data modality. In particular, an encoder for a given data modality can include any of a variety of processing layers (e.g., feedforward layers, convolutional layers, recurrent layers, attention layers, and so on) in any appropriate combination for processing embeddings for the given data modality to generate data for the given data modality. For example, an image decoder can be, e.g., a convolutional neural network, a Transformer neural network, and so on configured to process embeddings for pixels or groups of pixels within the image input to generate corresponding image data for the pixels or groups of pixels. As another example, a RADAR data encoder can be, e.g., a convolutional neural network, a Transformer neural network, and so on configured to process embeddings for RADAR data to generate image data for pixels or groups of pixels of images depicting the RADAR data. As another example, a LIDAR data encoder can be a Transformer neural network configured to process embeddings for regions of the point cloud data to generate corresponding output point cloud data.

Some or all of the decoders 332-A through 332-N can include pre-trained decoders (e.g., detokenizers) for particular data modalities. For example, the decoders 332-A through 332-N can include one or more pre-trained vision decoding neural networks, from a pre-trained multi-modal language model (e.g., pre-trained decoder neural networks for the pre-trained token processing neural network 220). As another example, the decoders 332-A through 332-N can include decoders obtained by distillation of pre-trained vision decoding neural networks from a pre-trained multi-modal language model (e.g., from the pretrained token processing neural network 220).

As described above, some or all of the decoders 232-A through 232-N can be jointly trained with corresponding encoders from the encoders 228-A through 228-N. For example, some or all of the decoders 232-A through 232-N can be trained alongside corresponding encoders from the encoders 228-A through 228-N to optimize a reconstruction error of encoding and decoding example data for their corresponding data modalities.

As described above, the multi-modal prediction system 120 can generate the output prediction 204 to perform any of a variety of prediction tasks for the vehicle. Some example prediction tasks for the vehicle are described next.

As one example, the prediction task can include generating a description of the environment of the vehicle and the output prediction 204 to include a description of the environment of the vehicle. For example, the output prediction 204 can include a text description of whether the environment is safe, unsafe, obstructed, flooded, etc. As another example, the output prediction 204 can include a description of a layout of the environment of the vehicle. In some cases, the input data 202 can include a request to describe the environment (e.g., "Describe the environment of the vehicle") and the system 120 can generate the description of the environment in response to the request. In some cases, the input data 202 can include a question regarding the environment of the vehicle (e.g., "Is the environment of the vehicle flooded?") and the system 120 can generate a response to the question (e.g., "No, the environment is not flooded"). In some cases, the system 120 can generate a description of the environment as part of a caption explaining the output prediction 204.

For example, a navigation system of the vehicle can query the multi-modal prediction system 120 regarding the environment as part of generating a navigation plan for the vehicle, e.g., to determine a layout of the environment, to identify hazardous operating conditions, and so on. As another example, an off-board system monitoring the vehicle can query the multi-modal prediction system 120 regarding the environment as part of monitoring an operation of the vehicle, e.g., to monitor hazardous conditions. As another example, a user-interface system of the vehicle can query the multi-modal prediction system 120 regarding the environment as part of informing or warning a user of the vehicle, e.g., to describe the environment to the user, to warn the user of hazardous operating conditions, and so on.

As another example, the prediction task can include generating a description of, e.g., one or more roadways, lanes, objects, other vehicles, and so on of the environment and the output prediction 204 can include such descriptions. For example, the output prediction 204 can include a description of whether lanes around the vehicle are, e.g., occupied, unoccupied, obstructed, flooded, and so on. As another example, the output prediction 204 can include classifications of types of objects or vehicles around the vehicle, e.g., "passenger vehicle", "emergency vehicle", "sedan", "truck", "bicycle", "pedestrian", "obstruction", and so on. As another example, the output prediction 204 can include descriptions of states of vehicles or objects around environment of the vehicle, e.g., "damaged", "moving", "merging", and so on. In some cases, the input data 202 can include a request to generate such a description (e.g., "Describe roadway in front of the vehicle", "Describe the other vehicles around the vehicle", etc.) and the system 120 can generate the requested description (e.g., "The roadway ahead of the vehicle is clear", "There is a pedestrian to the right of the vehicle and a truck in front of the vehicle"). In some cases, the input data 202 can include a question regarding roadways, lanes, objects, other vehicles, and so on around the vehicle (e.g., "Is the roadway ahead obstructed?", "What type of vehicle is in the lane ahead?", etc.) and the system 120 can generate a response to the question (e.g., "Yes, the roadway ahead is obstructed", "The vehicle ahead is an emergency vehicle", etc.). In some cases, the system 120 can generate such descriptions as part of a caption explaining the output prediction 204.

For example, a navigation system of the vehicle can query the multi-modal prediction system 120 regarding lanes, objects, vehicles, etc. around the vehicle as part of generating a navigation plan for the vehicle, e.g., to identify surroundings of the vehicle, to identify hazards or obstacles to the vehicle, and so on. As another example, an off-board system monitoring the vehicle can query the multi-modal prediction system 120 regarding lanes, objects, vehicles, etc. around the vehicle as part of monitoring an operation of the vehicle, e.g., to monitor hazards to the vehicle. As another example, a user-interface system of the vehicle can query the multi-modal prediction system 120 regarding lanes, objects, vehicles, etc. around the vehicle as part of informing or warning a user of the vehicle, e.g., to describe the surroundings of the vehicle to the user, to warn the user of hazards or obstacles, and so on.

When the input data 202 includes road graph data 212 for the environment, the output prediction 204 can include a description of the road graph for the environment. For example, the input data 202 can include a request such as "Describe the road graph near (30, 15)" and the system 120 can generate the output prediction 204 to include a description of the road graph such as "The nearest lane boundary is at (20, 30) with type 7".

For example, a navigation system of the vehicle can query the multi-modal prediction system 120 regarding the road graph for the environment as part of generating a navigation plan for the vehicle, e.g., to determine a layout of the lanes around the vehicle.

As another example, the prediction task can include generating a description of the vehicle or a state of the vehicle. For example, the output prediction 204 can include a description of whether the vehicle is operating safely, operating unsafely, damaged, operating unexpectedly, is experiencing a loss of control, is physically secure, and so on. In some cases, the input data 202 can include a request to describe the vehicle (e.g., "Describe the vehicle") and the system 120 can generate the output prediction 204 to include the description of the vehicle (e.g., "The vehicle is operating safely"). In some cases, the input data 202 can include a question regarding the vehicle (e.g., "Is the vehicle experiencing a loss of control?", "Is the vehicle obstructing the lane?", etc.) and the system 120 can generate a response to the question (e.g., "No, the vehicle is not experiencing a loss of control", "Yes, the vehicle is obstructing the lane", etc.).

For example, a navigation system of the vehicle can query the multi-modal prediction system 120 regarding the vehicle as part of generating a navigation plan for the vehicle, e.g., to determine an operating state of the vehicle. As another example, an off-board system monitoring the vehicle can query the multi-modal prediction system 120 regarding the vehicle as part of monitoring an operation of the vehicle, e.g., to monitor a state of the vehicle. As another example, a user-interface system of the vehicle can query the multi-modal prediction system 120 regarding lanes, objects, vehicles, etc. around the vehicle as part of informing or warning a user of the vehicle, e.g., to describe the state of the vehicle to the user, to warn the user of a hazardous state of the vehicle, and so on.

As another example, the prediction task can include predicting trajectories for one or more objects or vehicles in the environment and the output prediction 204 can include predicted trajectories for the one or more objects or vehicles in the environment. For example, the input data 202 can include a request to generate such predicted trajectories (e.g., "Predict trajectories for the surrounding vehicles") and the system 120 can generate the output prediction 204 to include the requested predicted trajectories.

For example, a navigation system of the vehicle can query the multi-modal prediction system 120 to determine predicted trajectories for objects and other vehicles as part of generating a navigation plan for the vehicle. As another example, a user-interface system of the vehicle can query the multi-modal prediction system 120 regarding predicted trajectories for objects and other vehicles as part of informing or warning a user of the vehicle, e.g., to warn the user of upcoming hazards. As another example, a simulation system can query the multi-modal prediction system to determine predicted trajectories for objects or vehicles as part of generating a simulation, e.g., to generate simulated trajectories of objects or vehicles in the simulation.

As another example, the prediction task can include generating a planned trajectory for the vehicle in the environment and the output prediction 204 can include the planned trajectory for the vehicle in the environment. In some cases, the input data 202 can include a request to generate a planned trajectory for the vehicle (e.g., "Plan a trajectory for the vehicle") and the system 120 can generate the output prediction 204 to include the requested planned trajectory.

For example, a navigation system of the vehicle can query the multi-modal prediction system 120 to determine a planned trajectory for the vehicle as part of generating a navigation plan for the vehicle. As another example, a user-interface system of the vehicle can query the multi-modal prediction system 120 regarding a planned trajectory for the vehicle as part of informing or warning a user of the vehicle, e.g., to inform a user about the planned trajectory for the vehicle, to warn the user of upcoming hazards, and so on. As another example, a simulation system can query the multi-modal prediction system to determine a planned trajectory for the vehicle as part of generating a simulation, e.g., to generate a simulated trajectories of the vehicle in the simulation.

In some cases, the input data 204 can include data characterizing a planned trajectory for the vehicle and a question regarding the planned trajectory (e.g., "Is the planned trajectory safe?", "What is the lateral gap severity for this trajectory?", etc.) and the system 120 can generate the output prediction 204 to include a response regarding the planned trajectory (e.g., "Yes, the planned trajectory is safe", "The lateral gap severity is 0.7", etc.).

In some cases, the input data 204 can include data characterizing a plurality of planned trajectories for the vehicle and a request to determine a preferred trajectory (e.g., "Is trajectory A or trajectory B preferred?") and the system 120 can generate the output prediction 204 to include a response indicating a preferred trajectory (e.g., "Trajectory A is preferred").

For example, a navigation system of the vehicle can query the multi-modal prediction system 120 to evaluate planned trajectories for the vehicle generated by the navigation system.

As another example, the prediction task can include predicting navigation data for the vehicle (e.g., including predicted object detections, predicted trajectories for surrounding vehicles, planned trajectories for the vehicle, and so on) and the output prediction 204 can include predicted navigation data for the vehicle. For example, the input data 202 can include a request to generate predicted navigation data (e.g., "Predict navigation data for the vehicle") and the system 120 can generate the output prediction 204 to include the requested predicted navigation data.

For example, a simulation system can query the multi-modal prediction system to determine predicted navigation data for the vehicle as part of generating a simulation, e.g., to generate a simulated navigation data for the vehicle in the simulation.

As another example, the prediction task can include predicting sensor data for one or more sensors of the vehicle and the output prediction 204 to include the predicted sensor data. For example, the input data 202 can include a request to generate sensor data for a one or more sensors of the vehicle (e.g., "Predict camera data for the vehicle", "Predict RADAR data for the vehicle", "Predict LIDAR data for the vehicle", "Predict sensor data for all sensors of the vehicle", "Predict sensor data for all front facing sensors of the vehicle", etc.) and the system 120 can generate the output prediction 204 to include the requested sensor data.

For example, a simulation system can query the multi-modal prediction system to determine predicted sensor data for the vehicle as part of generating a simulation, e.g., to generate a simulated sensor data for the vehicle in the simulation.

The system 120 can therefore respond to requests and generate output predictions for a variety of prediction tasks regarding the vehicle and the environment for use by, e.g., a simulation system that is generating a simulation of the vehicle and/or the environment, a navigation system of the vehicle that is generating navigation plan for controlling the vehicle, a user interface system of the vehicle that is providing information to a user of the vehicle, an off-board system that is monitoring the vehicle, and so on.

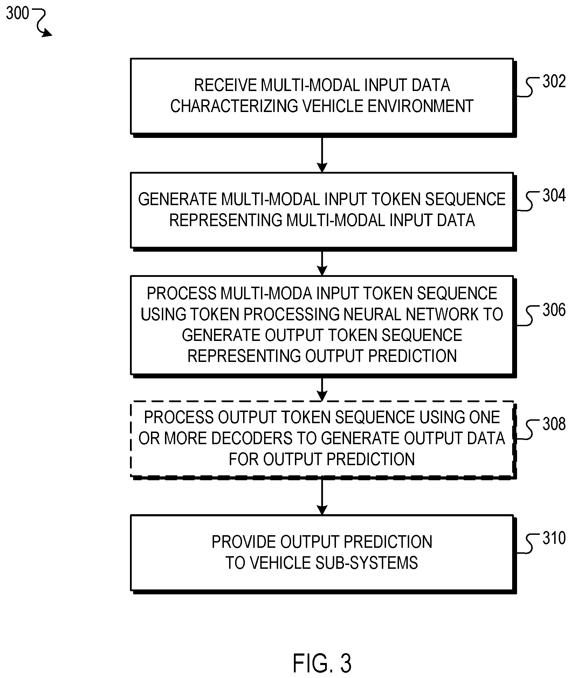

An example process by which the multi-modal prediction system 120 can process the input data 202 to generate the output prediction 204 is described in more detail below with reference to FIG. 3.

FIG. 3 is a flow diagram of an example process 300 for processing multi-modal input data characterizing an environment to generate an output prediction regarding the environment. For convenience, the process 300 will be described as being performed by a system of one or more computers located in one or more locations. For example, a multi-modal prediction system, e.g., the multi-modal prediction system 120 of FIG. 1A, appropriately programmed in accordance with this specification, can perform the process 300.

The system can receive multi-modal input data characterizing an environment (e.g., a driving environment of a vehicle of the system) that includes a respective input for each of a plurality of data modalities (step 302).

As described above with reference to FIG. 2, the multi-modal input data can include data for any of a variety of data modalities. For example, the input data can include text data. As another example, the input data can include sensor data obtained by each of one or more sensor types of the vehicle, e.g., image data obtained by one or more cameras of the vehicle, point-cloud LIDAR data obtained by one or more LIDAR sensors of the vehicle, RADAR data obtained by one or more RADAR sensors of the vehicle, and so on. As another example, the input data can include data characterizing a road graph for the environment that characterizes roadways in the environment (e.g., by specifying locations for roadways within the environment).

As another example, the input data can include structured navigational data (e.g., as generated by a navigation system of the vehicle). In some implementations, the structured navigational data can include data characterizing the environment, e.g., data characterizing a state of the environment, data characterizing a state of one or more traffic signals in the environment, and so on.

In some implementations, the structured navigational data can include data characterizing the vehicle itself, e.g., data characterizing a state of the vehicle with respect to the driving environment, a position of the vehicle in the environment at one or more time steps, an orientation of the vehicle in the environment at one or more time steps, a motion of the vehicle in the environment at one or more time steps, a trajectory of the vehicle in the environment (e.g., a trajectory of the vehicle specifying positions, velocities, and/or accelerations of the vehicle over one or more time steps), control inputs for the vehicle in the environment at one or more time steps, a planned trajectory of the vehicle in the environment (e.g., a planned trajectory of the vehicle specifying planned positions, velocities, and/or accelerations of the vehicle over one or more time steps), and so on.

In some implementations, the structured navigational data can include data characterizing one or more objects (e.g., obstructions, other vehicles, pedestrians, etc.) within the environment, e.g., data characterizing states of the one or more objects within the driving environment, positions of the one or more objects within the driving environment at one or more time steps, poses of the one or more objects within the driving environment at one or more time steps, motions of the one or more objects in the environment at one or more time steps, observed trajectories of the one or more objects in the environment (e.g., observed trajectories specifying observed positions, velocities, and/or accelerations of the objects over one or more time steps), predicted trajectories of the one or more objects in the environment (e.g., predicted trajectories specifying predicted positions, velocities, and/or accelerations of the objects over one or more time steps), and so on.

In some implementations, the structured navigational data can include data characterizing states of one or more objects generated based on sensor data obtained by one or more sensors of the vehicle. For example, the structured navigational data can include object detection data for the one or more objects (e.g., object detection data specifying bounding boxes for the one or more objects) generated by processing the sensor data obtained by one or more sensors of the vehicle using an object detection system.

In some implementations, the input data can include a request to perform particular prediction task. For example, the input data can include a request to generate a description of the environment, a request to generate a description of one or more attributes (e.g., lanes, roadways, objects, other vehicles, etc.) of the environment, a request to predict trajectories for one or more objects in the environment, a request to generate a planned trajectory for the vehicle in the environment, a request to predict sensor data for one or more sensors of the vehicle, and so on.

When the input data includes a request to perform a particular prediction task, the system can the output prediction to perform the particular prediction task.

As described above with reference to FIG. 1A and FIG. 1B, system can receive the input data from any of a variety of on-board and/or off-board systems for the vehicle, e.g., a sensor system of the vehicle, a navigation system of the vehicle, a user-interface system of the vehicle, an off-board system monitoring the vehicle, and so on. The system can receive different portions of the input data from different on-board and/or off-board systems for the vehicle, e.g., input navigational data and/or road graph data from a navigation system of the vehicle, input sensor data from a sensor system of the vehicle, input text data from an off-board system monitoring vehicle, a navigation system of the vehicle, a user-interface system of the vehicle, and so on.

The system can generate an input multimodal token sequence of input tokens representing the inputs for each of the plurality of data modalities of the received input data (step 304). In particular, the system can process the respective input for each of the plurality of data modalities of the multi-modal input data to generate a respective token sequence of input tokens representing the input for the data modality. The system can generate the input multi-modal token sequence by combining (e.g., concatenating) the respective token sequences representing the inputs for each of the data modalities of the multi-modal input data.

As described above, the input multimodal data can include time sequence data for one or more time steps. The system can generate the input multimodal token sequence to represent the time sequence for the input data by any appropriate method, e.g., by ordering the input tokens in accordance with times associated with the input tokens, by including input tokens specifying times of the time sequence, by including within the embedding for each input token data characterizing a time associated with the input token (e.g., as determined using a positional encoding that depends on the times of the time sequence), and so on.

As described above with reference to FIG. 2, the system can include a respective encoder (e.g., tokenizer) for each of the plurality of data modalities of the multi-modal input data. The system can include, e.g., a text encoder configured to process input text data to generate text tokens representing the input text tokens, an image encoder configured to process input image data to generate image tokens representing the input image data, a LIDAR encoder configured to process input LIDAR data to generate LIDAR tokens representing the input LIDAR data, a RADAR encoder configured to process input RADAR data to generate text tokens representing the input text tokens, one or more structured data encoders configured to process input navigational data to generate structured data tokens representing the input navigational data, and so on. The system can process input data for each data modality of the multi-modal input using a respective encoder for the data modality to generate the token sequence for the data modality.

As described in more detail below with reference to FIG. 4, each of the structured data encoders can be configured to quantize input structured numerical input data (structured numerical data specifying, e.g., positions and/or orientations of objects or vehicles in the environment, trajectories of objects or vehicles in the environment, bounding boxes for detected objects in the environment, road-graph data for the environment, etc.) and output structured data tokens representing the quantized data.

The system can process the input multimodal token sequence using a token processing neural network to generate an output token sequence representing the output prediction about the environment (step 306).

As described above with reference to FIG. 2, the token processing neural network can be an auto-regressive generative model (e.g., a multi-modal language model) configured (e.g., trained) to process the input token sequence to auto-regressively generate the output token sequence. An example process for training (e.g., fine-tuning) the token processing neural network to perform various prediction tasks for vehicles is described in more detail below with reference to FIG. 5

For example, the token processing neural network can auto-regressively generate output tokens of the output token sequence over a sequence of auto-regressive iterations. At each auto-regressive iteration, the token processing neural network can process the input token sequence and the output token sequence (as of the current auto-regressive iteration) to determine a probability distribution over a token vocabulary of the token processing neural network. The token processing neural network can select the output token for the auto-regressive iteration using the probability distribution, e.g., by sampling the output token in accordance with the probability distribution, by selecting a highest-probability output token, and so on.

In some implementations, the token processing neural network can be configured to generate (e.g., auto-regressively generate) the embeddings for the tokens of one or more continuous data modalities (e.g., image data, RADAR data, LIDAR data, and/or structured numerical data). For example, for one or more of the continuous data modalities, the token processing neural network can include a generative model for the continuous data modality configured conditionally generate embeddings for output tokens of the continuous data modality by processing previously generated output tokens and, optionally, some or all of the input token sequence, as described in more detail by Zhou, Chunting, et al. in "Transfusion: Predict the Next Token and Diffuse Images with One Multi-Modal Model" arXiv preprint arXiv:2408.11039 (2024*).*

In some implementations, the input token sequence can include tokens representing data for one or more data modalities that the token processing neural network is not configured to generate. For example, the input token sequence can include tokens with embeddings representing a continuous data modality that the token processing neural network is not configured to generate (e.g., a continuous data modality that is not a continuous data modality for which the token processing neural network includes a generative model).

As described above, the output prediction can include time sequence data for one or more time steps. The token processing neural network can generate the output token sequence to represent the time sequence for the output predictions by any appropriate method, e.g., by ordering the output tokens in accordance with times associated with the output tokens, by including output tokens specifying times of the time sequence, by including within the embedding for each output token data characterizing a time associated with the output token (e.g., as determined using a positional encoding that depends on the times of the time sequence), and so on.

The output token sequence can include tokens representing any of a variety of data modalities. For example, the output token sequence can include output text tokens representing output text data, such as text descriptions of the environment, text descriptions of predictions generated by the system, and so on. As another example, output token sequence can include output structured data tokens representing predicted navigation data, e.g., predicted traffic light states of traffic lights in the environment, predicted positions of agents in the environment, predicted interactions between agents in the environment, predicted object detections in the environment, and so on. As another example, the output token sequence can include tokens representing predicted sensor data for any of a variety of sensor data modalities, e.g., output image tokens representing predicted image data, output RADAR tokens representing predicted RADAR data, output LIDAR tokens representing predicted LIDAR data, and so on.

In particular, the output token sequence can include output tokens representing predicted data for a plurality of data modalities.

In some implementations, the system can process the output token sequence using one or more decoders to generate output data for the output prediction (step 308). As described above with reference to FIG. 2, the system can include a respective decoder (e.g., detokenizer) for each of the plurality of data modalities of the output token sequence. The system can include, e.g., a text decoder, an image decoder, a LIDAR decoder, a RADAR decoder, one or more structured data decoders, and so on. The system can process output tokens for each data modality of the output token sequence using a respective decoder for the data modality to generate output data for the data modality.

The system can provide data characterizing the output prediction for processing by other sub-systems of the vehicle (step 310). In some implementations, the system can provide the output token sequence generated by the token processing neural network to the other sub-systems of the vehicle. In other implementations, the system can provide to the other sub-systems of the vehicle output data generated by processing the output token sequence using one or more decoders.

The other sub-systems of the vehicle can process the output prediction to perform any of a variety of downstream tasks for the vehicle. For example, the system can provide the generated output prediction to a planning system of the vehicle that can process the prediction to determine one or more planned control inputs for the vehicle. The planned control inputs can be used to control the vehicle (e.g., to perform a navigation task for the vehicle within the driving environment for the vehicle). As another example, the system can provide the output predictions to a user interface system of the vehicle that can, e.g., provide information to a user of the vehicle regarding the driving environment of the vehicle based on the output prediction, warn a user of the vehicle about unsafe driving conditions based on the output prediction, and so on. As another example, the system can provide the generated output prediction to a simulation system as part of generating a simulation of the vehicle and/or the environment.

FIG. 4 is a flow diagram of an example process 400 for generating a sequence of tokens representing structured numerical data characterizing an environment of a vehicle. For convenience, the process 400 will be described as being performed by a system of one or more computers located in one or more locations. For example, a multi-modal prediction system, e.g., the multi-modal prediction system 120 of FIG. 1A, appropriately programmed in accordance with this specification, can perform the process 400.

The system can receive structured numerical data characterizing an environment of a vehicle (step 402). In particular, the structure numerical data can include one or more numerical values specifying characteristics of, e.g., objects within the environment, vehicles within the environment, roadways within the environment, and so on.

For example, the structured numerical data can characterize a spatial position and/or an orientation of an object or vehicle within the environment by specifying, e.g., coordinates, facing angles, and so on of the object or vehicle. As another example, the structured numerical data can characterize a trajectory of an object or vehicle within the environment by specifying, e.g., positions, velocities, and/or accelerations of the objects or vehicles over one or more time steps. As another example, the structured numerical data can characterize a bounding box for an object or vehicle in the environment, e.g., by specifying spatial locations of corners of the bounding box. As another example, the structured numerical data can characterize a road graph of the environment, e.g., by specifying spatial locations for roadways in the environment.

In some implementations, the system can quantize the numerical values of the structured numerical data (step 404). When the structured numerical data includes a plurality of numerical values, the system can jointly quantize some or all of the numerical values of the structure numerical data.

For example, in some implementations, the system can jointly quantize a plurality of numerical values of the structured numerical data using vector quantization, as described in more detail by Robert Grey in "Vector Quantization.", IEEE Assp Magazine 1.2 (1984): 4-29.

As another example, the system can process the input numerical data using one or more neural networks (e.g., quantizing networks) to generate quantized embeddings representing the input numerical data, as described in more detail by Van Den Oord et al. in "Neural Discrete Representation Learning.", Advances in Neural Information Processing Systems 30 (2017).

The system can be configured to (jointly) quantize any appropriate subsets of numerical values of the structured numerical data. For example, when tokenizing a trajectory that includes numerical values specifying positions and velocities for multiple time steps of the trajectory, the system can jointly quantize the positions and velocities all of the time steps of the trajectory. As another example, when tokenizing such a trajectory, the system can jointly tokenize the positions and velocities for portions of the trajectory (e.g., by jointly tokenizing the positions and velocities for different subsets of time steps for the trajectory). As another example, when tokenizing such a trajectory, the system can jointly quantize the positions and velocities for each individual time step of the trajectory. As another example, when tokenizing such a trajectory, the system can separately quantize the positions and velocities for each individual time step of the trajectory, while jointly quantizing numerical values specifying spatial components of the positions and velocities. As another example, when tokenizing such a trajectory, the system can separately quantize the numerical values specifying the spatial components of the positions and velocities for each individual time step of the trajectory. Example techniques for quantizing and tokenizing spatial trajectories is described by Seff, Ari, et al in "MotionLM: Multi-Agent Motion Forecasting as Language Modeling", Proceedings of the IEEE/CVF International Conference on Computer Vision, 2023.

The system can select one or more tokens representing the numerical values for the structured numerical data (step 406). For example, when the system quantizes the numerical values of the structured numerical data, the tokens representing the numerical values can be tokens associated with the quantized numerical values for the input.

As another example, the tokens representing the numerical values for the structured numerical data can be text tokens characterizing a text representation of the structured numerical data. For example, to represent structured numerical data that includes the array of numerical values [-8.410645, 3.5195312, -156.11572], the system can select a sequence of text tokens representing the text string "[-8.410645, 3.5195312, -156.11572]". When the system represents the structured numerical data using text tokens, the system can use text tokens representing the numerical values of the structured numerical data as truncated to a pre-defined precision. For example, to represent structured numerical data that includes the array of numerical values [-8.410645, 3.5195312, -156.11572], the system can select a sequence of text tokens representing the text string "[-8.4, 3.5, -156.1]".

In some implementations, when the system represents the structured numerical data using text tokens, the system can tokenize the text representation of the structured numerical data using an encoding technique such as byte-pair encoding, Wordpiece tokenization, Sentencepiece tokenization, and so on. The system can use the encoding technique to compress the text representation of the structured numerical data as a sequence of tokens from a vocabulary of a token processing network (e.g., tokens representing symbols, plain-text characters, Unicode characters, words, etc.in the vocabulary of the token processing neural network). As described above with reference to FIG. 2, the system can use the encoding technique to compress the text representation of the structured numerical data as a sequence of tokens from the vocabulary of the token processing network that would otherwise not be used as part of performing a vehicle data processing task (e.g., tokens representing unused symbols, unused plain-text characters, Unicode characters, or words in one or more unused natural languages, etc.). In particular, the encoding technique can use a codebook for text representations of structured numerical data that has been trained or optimized to compress a set of example text representations of structured numerical data (e.g., example structured numerical data as obtained from from real or simulated driving data logs for example vehicles). By utilizing a specialized codebook for structured numerical data (e.g., as opposed to a codebook configured to compress general natural language text), the encoding technique can better compress the text representation of the structured numerical data, which can enable the token processing neural network to more efficiently (e.g., using less computational time, less memory, etc.) process the structured numerical data.

FIG. 5 is a flow diagram of an example process 500 training a token processing neural network to perform one or more vehicle prediction tasks. For convenience, the process 500 will be described as being performed by a system of one or more computers located in one or more locations. For example, a training engine, e.g., the training engine 136 of FIG. 1A, appropriately programmed in accordance with this specification, can perform the process 500.

The system can obtain training data for the token processing neural network (step 502). The training data can include a plurality of training examples for each of one or more vehicle prediction tasks. Each training example can include an example input token sequence representing example input data characterizing an example environment of an example vehicle for the training example and a target output token sequence representing a target prediction for the training example.

The training data can include training examples for any of a variety of vehicle prediction tasks. For example, the prediction task for one or more training examples can include generating a description of the example environment for the training example. As another example, the prediction task for one or more training examples can include generating a description of an attribute (e.g., a roadway, an object, a vehicle, etc.) of the example environment for the training example. As another example, the prediction task for more or more training examples can include predicting trajectories for one or more objects in the example environment for the training example. As another example, the prediction task for more or more training examples can include generating a planned trajectory for the example vehicle of the training example. As another example, the prediction task for more or more training examples can include predicting sensor data for one or more sensors of the example vehicle of the training example.

The system can train the token processing neural network over a sequence of training iterations. At each training iteration, the system can perform steps 504 through 510.

The system can determine, for each of a plurality of training examples for the training iteration, likelihoods of the token processing neural network generating output tokens of the target output token sequence for the training example by processing the example input token sequence for the training example (step 504). In particular, the system can determine, for each training example, a respective likelihood of the token processing neural network generating each output token of the target output token sequence by processing the example input token sequence and any preceding output tokens in the target output token sequence.

The system can update parameters of the token processing neural network to optimize an objective function that depends on the likelihoods of the token processing neural network generating the output tokens of target output token sequences for the training iteration (step 506). For example, the objective function can measure, for each training example, a negative-log-likelihood of the token processing neural network generating the target output token sequence for the training example. As a further example, for each target output token sequence for each training example, he objective function can measure a negative-log-likelihood of the token processing neural network generating the output token sequence.

The system can update the parameters of the token processing neural network using any appropriate machine learning technique. For example, the system can determine gradients of the objective function with respect to the parameters of the token processing neural network and can determine updates for the parameters using, e.g., stochastic gradient descent, ADAM, and so on.

In some implementations, the system can update the embeddings for some or all of the tokens of the example input token sequences and the target output token sequences, e.g., by backpropagating gradients of the objective function through the token processing neural network.

The system can determine whether the training is complete (step 508). The system can use any of a variety of criteria to determine whether the training is complete. For example, the system can determine that training is complete after a pre-determined number of training iterations. As another example, the system can determine that training is complete when a value of the objective function falls below a pre-determined threshold. As another example, the system can determine that training is complete when a difference between values of the training objective function for the current training iteration and a previous training iteration falls below a pre-determined threshold.

If the system determines that pre-training is not complete, the system can continue to a next training iteration (e.g., return to step 504)

When the system determines that pre-training is complete, the system can provide the trained token processing neural network (step 510).

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, or a Jax framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

In addition to the embodiments described above, the following embodiments are also innovative:
Embodiment 1 is a method performed by one or more computers, the method comprising: receiving input data that characterizes a driving environment, wherein the input data comprises a respective input for each of a plurality of data modalities characterizing the driving environment; generating an input multimodal token sequence of input tokens that represents the inputs for each of the plurality of data modalities; and processing the input multimodal token sequence using a token processing neural network to generate an output token sequence representing a prediction about the driving environment.
Embodiment 2 is the method of embodiment 1, wherein the input data characterizes the driving environment for a vehicle within the driving environment.
Embodiment 3 is the method of embodiment 2, wherein the plurality of data modalities includes data obtained by each of one or more sensor types of the vehicle.
Embodiment 4 is the method of embodiment 3, wherein the plurality of data modalities includes image data obtained by a camera of the vehicle.
Embodiment 5 is the method of embodiment 3 or embodiment 4, wherein the plurality of data modalities includes point-cloud data obtained by a LIDAR sensor of the vehicle.
Embodiment 6 is the method of any one of embodiments 3-5, wherein the plurality of data modalities includes data obtained by a RADAR sensor of the vehicle.
Embodiment 7 is the method of any one of embodiments 1-6, wherein the plurality of data modalities includes data characterizing a road graph for the environment that characterizes roadways in the environment.
Embodiment 8 is the method of any one of embodiments 2-7, wherein the plurality of data modalities includes structured navigational data generated by a navigation system of the vehicle.
Embodiment 9 is the method of embodiment 8, wherein the structured navigational data generated by the navigation system of the vehicle comprises data characterizing a state of the driving environment.
Embodiment 10 is the method of embodiment 9, wherein the structured navigational data generated by the navigation system of the vehicle comprises data characterizing a state of one or more traffic signals in the environment.
Embodiment 11 is the method of any one of embodiments 8-10, wherein the structured navigational data generated by the navigation system of the vehicle comprises data characterizing a state of the vehicle with respect to the driving environment.
Embodiment 12 is the method of embodiment 11, wherein the structured navigational data generated by the navigation system of the vehicle comprises data characterizing a position of the vehicle in the environment at one or more time steps.
Embodiment 13 is the method of embodiment 11 or embodiment 12, wherein the structured navigational data generated by the navigation system of the vehicle comprises data characterizing an orientation of the vehicle in the environment at one or more time steps.
Embodiment 14 is the method of any one of embodiments 11-13, wherein the structured navigational data generated by the navigation system of the vehicle comprises data characterizing motion of the vehicle in the environment at one or more time steps.
Embodiment 15 is the method of any one of embodiments 11-14, wherein the structured navigational data generated by the navigation system of the vehicle comprises data characterizing a control input for the vehicle in the environment at one or more time steps.
Embodiment 16 is the method of any one of embodiments 11-15, wherein the structured navigational data generated by the navigation system of the vehicle comprises data characterizing a trajectory of the vehicle in the environment.
Embodiment 17 is the method of embodiment 16, wherein the structured navigational data generated by the navigation system of the vehicle comprises data characterizing a planned trajectory of the vehicle in the environment.
Embodiment 18 is the method of any one of embodiments 8-17, wherein the structured navigational data generated by the navigation system of the vehicle comprises data characterizing states of one or more objects within the driving environment.
Embodiment 19 is the method of embodiment 18, wherein the structured navigational data generated by the navigation system of the vehicle comprises data characterizing positions of the one or more objects within the driving environment at one or more time steps.
Embodiment 20 is the method of embodiment 18 or embodiment 19, wherein the structured navigational data generated by the navigation system of the vehicle comprises data characterizing poses of the one or more objects within the driving environment at one or more time steps.
Embodiment 21 is the method of any one of embodiments 18-20, wherein the structured navigational data generated by the navigation system of the vehicle comprises data characterizing motions of the one or more objects in the environment at one or more time steps.
Embodiment 22 is the method of any one of embodiments 18-21, wherein the structured navigational data generated by the navigation system of the vehicle comprises data characterizing trajectories of the one or more objects in the environment.
Embodiment 23 is the method of embodiment 22, wherein the structured navigational data generated by the navigation system of the vehicle comprises data characterizing predicted trajectories of the one or more objects in the environment.
Embodiment 24 is the method of any one of embodiments 18-23, wherein the data characterizing the states of one or more objects comprises data generated based on sensor data obtained by one or more sensors of the vehicle.
Embodiment 25 is the method of embodiment 24, wherein the data characterizing the states of one or more objects comprises object data generated by processing the sensor data obtained by one or more sensors of the vehicle using an object detection system.
Embodiment 26 is the method of any one of embodiments 1-25, wherein the plurality of data modalities includes text data.
Embodiment 27 is the method of embodiment 26, wherein the output token sequence comprises tokens characterizing a text description of the driving environment.
Embodiment 28 is the method of embodiment 26 or embodiment 27, wherein the output token sequence comprises tokens characterizing a text description of the prediction about the driving environment.
Embodiment 29 is the method of any one of embodiments 26-28, wherein: the input data comprises a request to perform a prediction task; and processing the input multimodal token sequence using the token processing neural network to generate the output token sequence representing the prediction about the driving environment comprises: processing the input multimodal token sequence using the token processing neural network to generate the output token sequence representing a prediction about the driving environment for the driving task.
Embodiment 30 is the method of embodiment 29, wherein the input multimodal token sequence comprises one or more multimodal tokens specifying the request to perform the prediction task.
Embodiment 31 is the method of embodiment 29 or embodiment 30, wherein the request to perform the prediction task comprises a request to generate a description of the driving environment.
Embodiment 32 is the method of any one of embodiments 29-31, wherein the request to perform the prediction task comprises a request to generate a description of an attribute of the driving environment.
Embodiment 33 is the method of any one of embodiments 29-32, wherein the request to perform the prediction task comprises a request to predict trajectories for one or more objects in the environment.
Embodiment 34 is the method of any one of embodiments 29-33, wherein the request to perform the prediction task comprises a request to generate a planned trajectory for the vehicle in the environment.
Embodiment 35 is the method of any one of embodiments 29-34, wherein the request to perform the prediction task comprises a request to predict sensor data for one or more sensors of the vehicle.
Embodiment 36 is the method of any one of embodiments 1-35, wherein generating an input multimodal token sequence of input tokens that represents the inputs for each of the plurality of data modalities comprises, for each of the plurality of data modalities: generating a token sequence of input tokens that represents the input of the data modality.
Embodiment 37 is the method of any one of embodiments 1-36, wherein the token prediction neural network configured to auto-regressively generate the output token sequence based on the input multimodal token sequence.
Embodiment 38 is the method of any one of embodiments 1-37, wherein the token prediction neural network includes one or more of attention layers, wherein each attention layer is configured to process input multimodal token sequences for the attention layer by applying a respective attention operation for the attention layer.
Embodiment 39 is the method of embodiment 38, wherein the token prediction neural network is configured to generate the output token sequence by processing the input token sequence using the one or more attention layers to apply the attention operations of each of the attention layers to the input token sequence.
Embodiment 40 is the method of embodiments 38 or embodiment 39, wherein each attention layer is configured to process the input multimodal token sequences for the attention layer by applying the respective attention operation for the attention layer to the input token sequence using an attention mask for the attention layer.
Embodiment 41 is the method of embodiment 40, wherein the attention mask for each attention layer is an auto-regressive attention mask.
Embodiment 42 is the method of any one of embodiments 1-41, wherein generating the input multimodal token sequence of input tokens that represents the inputs for each of the plurality of data modalities comprises, for each input: selecting one or more input tokens representing numerical values for the input.
Embodiment 43 is the method of embodiment 42, wherein selecting one or more input tokens representing numerical values for the input comprises selecting the one or more input tokens representing numerical values for the input using byte pair encoding.
Embodiment 44 is the method of embodiment 42 or embodiment 43, wherein, for each of the inputs, selecting the one or more input tokens representing the numerical values for the input, comprises: quantizing each of the numerical values for the input; and selecting one or more input tokens representing the quantized numerical values for the input.
Embodiment 45 is the method of embodiment 44, wherein, for one or more of the inputs, quantizing each of the numerical values for the input comprises jointly quantizing a plurality of the numerical values for the input.
Embodiment 46 is the method of any one of embodiments 44-45, wherein, for a plurality of the inputs, quantizing each of the numerical values for the input comprises jointly quantizing the numerical values for the plurality of the inputs.
Embodiment 47 is the method of any one of embodiments 42-46 wherein quantizing each of the numerical values for the input comprises processing each of the numerical values for the input using a quantization network.
Embodiment 48 is the method of any one of embodiments 42-47, wherein, for one or more of the inputs, the one or more input tokens representing the numerical values for the input comprise input tokens characterizing text representations of the numerical values.
Embodiment 49 is the method of any one of embodiments 1-48, wherein the token prediction neural network has been trained using a machine learning technique to generate predictions about the driving environment, the training comprising: obtaining a plurality of training examples, wherein each training example is associated with a processing task for the training example and comprises (i) example input data that characterizes a driving environment for the training example and (ii) a target prediction about the driving environment for the prediction task for the training example; and updating the token prediction neural network to optimize an objective function that measures a error between the target predictions for the training examples and corresponding predictions generated for the training examples using the token prediction neural network.
Embodiment 50 is the method of embodiment 49, wherein the plurality of training examples comprises, for each of a plurality of processing tasks, one or more training examples associated with the processing task.
Embodiment 51 is the method of embodiment 49 or embodiment 50, wherein the prediction task associated with one or more training examples comprises generating a description of the driving environment for the training example.
Embodiment 52 is the method of any one of embodiments 49-51, wherein the prediction task associated with one or more training examples comprises generating a description of an attribute of the driving environment for the training example.
Embodiment 53 is the method of any one of embodiments 49-52, wherein the prediction task associated with one or more training examples comprises predicting trajectories for one or more objects in the driving environment for the training example.
Embodiment 54 is the method of any one of embodiments 49-53, wherein the prediction task associated with one or more training examples comprises generating a planned trajectory for a vehicle in the driving environment for the training example.
Embodiment 55 is the method of any one of embodiments 49-54, wherein the prediction task associated with one or more training examples comprises predicting sensor data for one or more sensors of a vehicle in the driving environment for the training example.
Embodiment 56 is a system comprising: one or more computers; and one or more storage devices communicatively coupled to the one or more computers, wherein the one or more storage devices store instructions that, when executed by the one or more computers, cause the one or more computers to perform the operations of the respective method of any one of embodiments 1-55.
Embodiment 57 is one or more non-transitory computer storage media storing instructions that when executed by one or more computers cause the one or more computers to perform the operations of the respective method of any one of embodiments 1-55.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method performed by one or more computers, the method comprising:
receiving input data that characterizes a driving environment, wherein the input data comprises a respective input for each of a plurality of data modalities characterizing the driving environment;
generating an input multimodal token sequence of input tokens that represents the inputs for each of the plurality of data modalities; and
processing the input multimodal token sequence using a token processing neural network to generate an output token sequence representing a prediction about the driving environment.

2. The method of claim 1, wherein the input data characterizes the driving environment for a vehicle within the driving environment.

3. The method of claim 2, wherein the plurality of data modalities includes data obtained by each of one or more sensor types of the vehicle.

4. The method of claim 3, wherein the plurality of data modalities includes image data obtained by a camera of the vehicle; and/or wherein the plurality of data modalities includes point-cloud data obtained by a LIDAR sensor of the vehicle; and/or wherein the plurality of data modalities includes data obtained by a RADAR sensor of the vehicle.

5. The method of any preceding claim, wherein the plurality of data modalities includes data characterizing a road graph for the environment that characterizes roadways in the environment.

6. The method of any one of claims 2-5, wherein the plurality of data modalities includes structured navigational data generated by a navigation system of the vehicle.

7. The method of claim 6, wherein the structured navigational data generated by the navigation system of the vehicle comprises data characterizing states of one or more objects within the driving environment;
optionally wherein the data characterizing the states of one or more objects comprises data generated based on sensor data obtained by one or more sensors of the vehicle;
further optionally wherein the data characterizing the states of one or more objects comprises object data generated by processing the sensor data obtained by one or more sensors of the vehicle using an object detection system.

8. The method of any preceding claim, wherein the plurality of data modalities includes text data.

9. The method of claim 8, wherein:
the input data comprises a request to perform a prediction task; and
processing the input multimodal token sequence using the token processing neural network to generate the output token sequence representing the prediction about the driving environment comprises:
processing the input multimodal token sequence using the token processing neural network to generate the output token sequence representing a prediction about the driving environment for the driving task.

10. The method of claim 9, wherein the input multimodal token sequence comprises one or more multimodal tokens specifying the request to perform the prediction task.

11. The method of claim 9 or claim 10, wherein the request to perform the prediction task comprises a request to generate a description of the driving environment; and/or wherein the request to perform the prediction task comprises a request to generate a description of an attribute of the driving environment; and/or wherein the request to perform the prediction task comprises a request to predict trajectories for one or more objects in the environment; and/or wherein the request to perform the prediction task comprises a request to generate a planned trajectory for the vehicle in the environment; and/or wherein the request to perform the prediction task comprises a request to predict sensor data for one or more sensors of the vehicle.

12. The method of any preceding claim, wherein generating an input multimodal token sequence of input tokens that represents the inputs for each of the plurality of data modalities comprises, for each of the plurality of data modalities:
generating a token sequence of input tokens that represents the input of the data modality.

13. The method of any preceding claim, wherein generating the input multimodal token sequence of input tokens that represents the inputs for each of the plurality of data modalities comprises, for each input:
selecting one or more input tokens representing numerical values for the input.

14. The method of claim 13, wherein selecting one or more input tokens representing numerical values for the input comprises selecting the one or more input tokens representing numerical values for the input using byte pair encoding.

15. The method of claim 13 or claim 14, wherein, for each of the inputs, selecting the one or more input tokens representing the numerical values for the input, comprises:
quantizing each of the numerical values for the input; and
selecting one or more input tokens representing the quantized numerical values for the input;
optionally wherein for one or more of the inputs, quantizing each of the numerical values for the input comprises jointly quantizing a plurality of the numerical values for the input.

16. The method of any one of claims 13-15, wherein, for one or more of the inputs, the one or more input tokens representing the numerical values for the input comprise input tokens characterizing text representations of the numerical values.

17. The method of any preceding claim, wherein the token prediction neural network has been trained using a machine learning technique to generate predictions about the driving environment, the training comprising:
obtaining a plurality of training examples, wherein each training example is associated with a processing task for the training example and comprises (i) example input data that characterizes a driving environment for the training example and (ii) a target prediction about the driving environment for the prediction task for the training example; and
updating the token prediction neural network to optimize an objective function that measures a error between the target predictions for the training examples and corresponding predictions generated for the training examples using the token prediction neural network.

18. The method of claim 17, wherein the plurality of training examples comprises, for each of a plurality of processing tasks, one or more training examples associated with the processing task.

19. A system comprising:
one or more computers; and
one or more storage devices communicatively coupled to the one or more computers,
wherein the one or more storage devices store instructions that, when executed by the one or more computers, cause the one or more computers to perform the operations of any one of claims 1-18.

20. One or more non-transitory computer storage media storing instructions that when executed by one or more computers cause the one or more computers to perform the operations of any one of claims 1-18.
